# EUROPEAN PATENT SPECIFICATION

(11) **EP 3 543 787 B1**
(45) Date of publication and mention of the grant of the patent: **14.10.2020**
(21) Application number: 18162677.1
(22) Date of filing: 19.03.2018
(51) Int. Cl.: G03B 17/56

(54) **LENS PROTECTION SYSTEM**
OBJEKTIVSCHUTZSYSTEM
SYSTÈME DE PROTECTION POUR OBJECTIVES

(43) Date of publication of application: 25.09.2019
(73) Proprietor: CET Electronics S.N.C., 31050 Zenson Di Piave (TV) (IT)
(72) Inventor: Vicino, NICOLA, 31050 Zenson Di Piave (TV) (IT)
(74) Representative: Citron, Massimiliano

(56) References cited:
- DE-B3- 10 360 283
- US-A1- 2007 025 725
- US-A1- 2007 269 202
- US-A1- 2017 313 288
- US-B1- 6 254 289

## Description

The invention relates to a protection system and device for the lens of a photographic apparatus, including in particular cameras, which works in environments possibly subject to dirt and preferably in automatic manner, i.e. with power on/off and image acquisition programmable in advance.

Devices of the aforementioned type are used for various objects such as, by way of example, in agriculture for remote monitoring the health or growth condition of crops or, in painting plants, for automatic monitoring the finishing operation result.

It is known that in environments where there is a risk of contamination of the optics by powdery material, liquids containing salts or other substances in solution, the use of optical/photographic equipment is very limited because even small contaminations can compromise the correct acquisition of images. For example, in the agricultural field, plants are periodically sprayed with phytosanitary products, which inevitably end up contaminating the lenses or the fixed protections. Similarly, during a painting process contamination of lenses or fixed protections can take place.

Known solutions consist mainly of applying in front of the lens transparent protections that, once contaminated, must be replaced or cleaned manually, thereby preventing the possibility of automatic operation in continuous way. E.g. DE10360283, US2014036132 and US2012000024A envisage the association of motorized active cleaning mechanisms to the transparent protection. This type of solutions refers to mechanical cleaning systems based on brushing/rubbing the optics or the fixed protection. These systems, while allowing protection of the lenses of the optical devices, usually involve a risk of surface abrasion in case hard particulate matter is present (e.g. salt deposits from phytosanitary treatments or powder) as well as the wear of the cleaning mechanism.

WO 2008/028479 refers, for example, to an automatic cleaning system of a camera.

US 20070025725, US 6 254 289 B1 and DE 103 60 283 83 disclose protection devices for a lens.

The object of the present invention is to improve the state of the art, in particular to solve the disadvantages of the state of the art described above.

The lens protection device is according to claim 1.

The movable protection is movable so as to move with it the solid portion to occlude or clear the pass-through opening of the fixed external protection.

The fixed protection and the movable protection are each provided with a pass-through opening.

When the pass-through opening of the fixed protection is occluded by the solid portion of the movable protection, the photographic apparatus and/or a lens thereof is protected by the solid portion.

On the other hand, when the pass-through-opening of the movable protection is aligned with the pass-through opening of the fixed protection, an obstruction-free optical path is created for the photographic apparatus through the aligned pass-through openings.

The device is particularly applicable in environments wherein the presence of contaminants is "discontinuous" (where - therefore - time periods exist in which the presence of contaminants is sufficiently small not to compromise the correct acquisition of images), thereby resulting easy and economical to build as well.

In particular, the device allows the protection of lenses from contaminants, and only when it is necessary to acquire the images the protection is removed with a particular mechanism and the lenses remain exposed or protected only by a fixed protection.

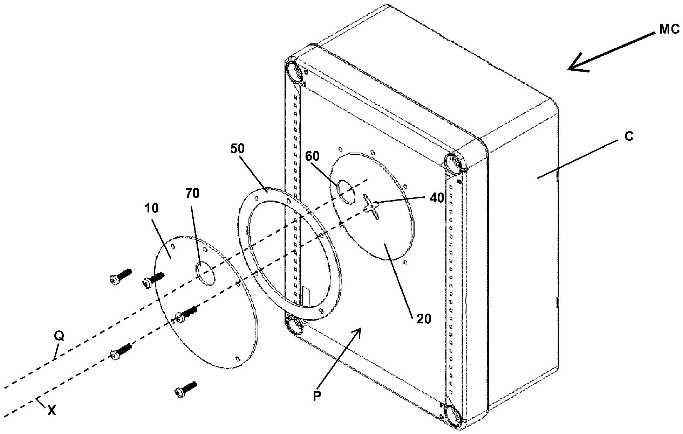

The advantages of the invention will be clearer from the following description of a preferred embodiment of a device, referring to the attachment drawing in which
- Fig. 1 shows a three-dimensional view of a device,
- Fig. 2 shows a three-dimensional view of the device in fig. 1 in a different configuration.

With reference to the attached figures, a container C is visible inside which a photographic device (not shown) is arranged, such as a camera or a video-camera.

The photographic device is usually directed towards a front side wall P of the container C, to shoot towards the container's exterior. To this aim, the external surface of the wall P is equipped with a transparent window, which however is exposed to contaminants and can get dirty.

The device MC comprises on the front side wall P, going from the outside to the inside, a sandwich structure composed of a first fixed protection 10, an optional spacer ring 50, and a movable protection 20.

The fixed protection 10 and the movable protection 20 are preferably of circular shape, and are provided with - respectively - a pass-through opening 70 and a pass-through opening 60.

The fixed protection 10 is superimposed on the movable protection 20 and is the most external component.

The movable protection 20 is superimposed on a second optional fixed protection 30, made of transparent material, which is arranged in the wall P and in turn aligned with the lenses of the image acquisition device contained in the container C. In this way the aforementioned lenses can acquire images along a linear optical path Q, parallel to the X axis, which starts from the lenses and crosses the fixed protection 30 and the pass-through opening 70.

The movable protection 20 is connected to a rotor 40 connected in turn to a servo-control housed inside the container C, e.g. an electric motor. The movable protection 20 can be actuated by the rotor 40 to rotate about an axis X. The pass-through opening 60 is offset with respect to the X axis, therefore it rotates about the X axis with revolutionary motion. The relative position between the X axis and the pass-through opening 60 and between the pass-through opening 60 and the pass-through opening 70 allows the two openings 60, 70 to be collimated or not according to the rotation angle of the movable protection 20.

During acquisition of the images, by activating the rotor 40 the pass-through opening 60 is rotated so as to align it with the pass-through opening 70, allowing the regular functionality of the photographic device. That is to say, in this configuration the optical path Q is not obstructed and passes through the empty pass-through openings 60, 70 and the protection 30.

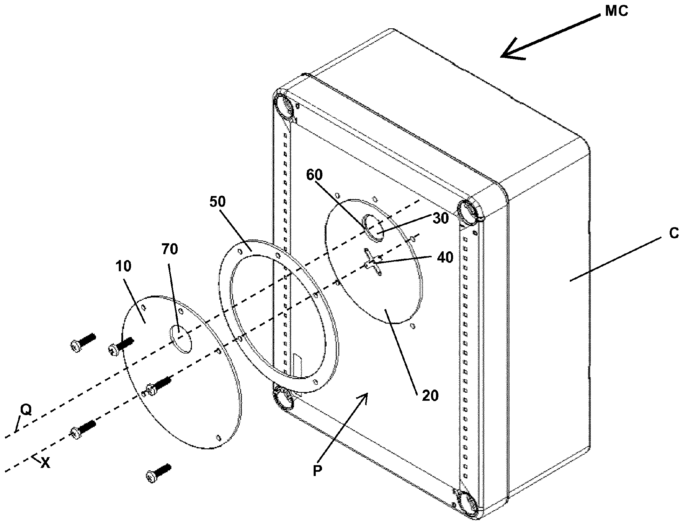

When no images are to be acquired (Fig. 2), the rotor 40 is controlled so that the movable protection 20 rotates about the X axis to move the pass-through opening 60 and break the alignment with the pass-through opening 70. So, the lenses remain protected from dirt coming from the pass-through opening 70 thanks to a solid wall of the movable protection 20 that has taken the place of the pass-through opening 60 behind the opening 70.

The movable protection 20 is movable in various ways, the simplest ones being to mount it translatable, e.g. linearly, relative to the external fixed protection 10 and/or rotatable about an axis.

Another way to move the movable protection is to allow it to swing on a pin above the wall P, so as to be able to move like a guillotine with respect to the pass-through opening 70 to occlude or clear the pass-through opening 70.

Therefore the movable protection 20 does not necessarily have to include an empty portion as the portion 60.

The movable protection 20 is mounted movably inside the spacer ring 50, and on the latter is fixed the external fixed protection 10. The spacer ring 50 can be replaced by an equivalent thickness of different shape.

## Claims

1. Protection device (MC) for lenses of a photographic apparatus, comprising
a container (C) for the photographic apparatus,
the container (C) comprising a wall (P) towards which the photographic apparatus can be pointed,
the wall (P) comprising a sandwich structure formed in the order by
- a fixed external protection (10) provided with a pass-through opening (70);
- a more internal movable protection (20) provided with a solid portion,
the internal movable protection (20) being displaceable so as to occlude or clear, with the solid portion, the pass-through opening (70).
**characterized in that** the fixed external protection (10) and the internal movable protection (20) are each provided with a pass-through opening (60, 70),
the internal movable protection (20) being displaceable so as to align or misalign the pass-through openings (60, 70) so that when the two pass-through openings (60, 70) are misaligned, the photographic apparatus is protected by the solid portion of the internal movable protection (20),
while when the two pass-through openings (60, 70) are aligned, an obstruction-free optical path for the photographic apparatus is created through the two pass-through openings (60, 70).

2. Device according to claim 1, wherein a layer made out of transparent material, fixed with respect to the wall (P), is interposed between the internal movable protection (20) and the photographic apparatus.

3. Device according to claim 1 or 2, wherein the internal movable protection (20) is mounted to be translatable with respect to the fixed external protection (10).

4. Device according to claim 1 or 2, wherein the internal movable protection (20) is mounted to be rotatable about an axis (X) and relative to the fixed external protection (10).

5. Device according to any one of the previous claims, comprising an electric drive for moving the internal movable protection (20).

6. Device according to claim 5, wherein the electric drive comprises a rotary electric motor.

7. Device according to any one of the previous claims, comprising a spacer element between the fixed external protection (10) and the internal movable protection (20).

8. Device according to claim 7, wherein the spacer element surrounds the internal movable protection (20).

## Patentansprüche

1. Vorrichtung (MC) zum Schützen von Linsen eines fotografischen Apparats, umfassend
einen Behälter (C) für den fotografischen Apparat,
wobei der Behälter (C) eine Wand (P) umfasst, zu der der fotografische Apparat gewandt werden kann,
wobei die Wand (P) eine Sandwichstruktur umfasst, die in der Reihenfolge umfasst:
- Ein fester äußerer Schutz (10), die mit einer Durchgangsöffnung (70) versehen ist;
- Ein beweglicher innerster Schutz (20), die mit einem vollen Abschnitt versehen ist,
wobei der bewegliche Schutz (20) verschiebbar ist, um die Durchgangsöffnung (70) mit dem vollen Abschnitt zu verschließen oder freizugeben,
**dadurch gekennzeichnet, dass** der feste äußere Schutz (10) und der bewegliche innere Schutz (20) jeweils mit einer Durchgangsöffnung (60, 70) versehen sind,
wobei der bewegliche innere Schutz (20) so verschiebbar ist, um die Durchgangsöffnungen (60, 70) auszurichten oder zu versetzen, dass
wenn die zwei Durchgangsöffnungen (60, 70) versetzt sind, der fotografische Apparat durch den vollen Abschnitt des beweglichen inneren Schutzes (20) geschützt wird,
während, wenn die zwei Durchgangsöffnungen (60, 70) ausgerichtet sind, ein von Hindernissen freier optischer Weg für den fotografischen Apparat durch die zwei Durchgangsöffnungen (60, 70) erzeugt wird.

2. Vorrichtung nach Anspruch 1, wobei zwischen dem beweglichen inneren Schutz (20) und dem fotografischen Apparat eine Schicht aus transparentem Material angeordnet ist, die in Bezug auf die Wand (P) fest ist.

3. Vorrichtung nach Anspruch 1 oder 2, wobei der bewegliche innere Schutz (20) in Bezug auf den festen äußeren Schutz (10) verschiebbar gelagert ist.

4. Vorrichtung nach Anspruch 1 oder 2, wobei der bewegliche innere Schutz (20) in Bezug auf den festen äußeren Schutz (10) drehbar um eine Achse (X) gelagert ist.

5. Vorrichtung nach einem der vorhergehenden Ansprüche, umfassend einen elektrischen Antrieb zum Bewegen des beweglichen inneren Schutzes (20).

6. Vorrichtung nach Anspruch 5, wobei der elektrische Antrieb einen rotierenden Elektromotor umfasst.

7. Vorrichtung nach einem der vorhergehenden Ansprüche, umfassend ein Abstandselement zwischen dem festen äußeren Schutz (10) und dem beweglichen inneren Schutz (20).

8. Vorrichtung nach Anspruch 7, wobei das Abstandselement den beweglichen inneren Schutz (20) umgibt.

## Revendications

1. Dispositif (MC) de protection d'objectif d'un appareil photographique, comprenant
un boîtier (C) pour l'appareil photographique,
le boîtier (C) comprenant une paroi (P) vers laquelle l'appareil photographique est dirigé,
la paroi (P) comprenant une structure sandwich formée dans l'ordre de
- une protection extérieure fixe (10) pourvue d'une ouverture traversante (70) ;
- une protection mobile (20) plus interne pourvue d'une partie complète,
la protection mobile (20) étant déplaçable de manière à obturer ou à libérer, avec la partie complète, l'ouverture traversante (70),
**caractérisé en ce que** la protection extérieure fixe (10) et la protection intérieure mobile (20) sont chacune pourvues d'une ouverture traversante (60, 70),
la protection intérieure mobile (20) étant déplaçable de manière à aligner ou désaligner les ouvertures traversantes (60, 70) de sorte que
lorsque les deux ouvertures traversantes (60, 70) sont désalignées, l'appareil photographique est protégé par la partie complète de la protection intérieure mobile (20),
tandis que lorsque les deux ouvertures traversantes (60, 70) sont alignées, un chemin optique exempt d'obstructions est créé pour l'appareil photographique à travers les deux ouvertures traversantes (60, 70).

2. Dispositif selon la revendication 1, où une couche de matériau transparent fixée par rapport à la paroi (P) est interposée entre la protection intérieure mobile (20) et l'appareil photographique.

3. Dispositif selon la revendication 1 ou 2, où la protection intérieure mobile (20) est montée de manière à pouvoir être déplacée en translation par rapport à la protection extérieure fixe (10).

4. Dispositif selon la revendication 1 ou 2, où la protection intérieure mobile (20) est montée pour pouvoir tourner autour d'un axe (X) et par rapport à la protection extérieure fixe (10).

5. Dispositif selon l'une quelconque des revendications précédentes, comprenant un entraînement électrique pour déplacer la protection intérieure mobile (20).

6. Dispositif selon la revendication 5, où l'entraînement électrique comprend un moteur électrique rotatif.

7. Dispositif selon l'une quelconque des revendications précédentes, comprenant une pièce intercalaire entre la protection extérieure fixe (10) et la protection intérieure mobile (20).

8. Dispositif selon la revendication 7, où la pièce intercalaire entoure la protection intérieure mobile (20).
